# EUROPEAN PATENT APPLICATION

(11) **EP 0 588 525 A1**
(43) Date of publication of application: **23.03.1994**
(21) Application number: 93306842.1
(22) Date of filing: 27.08.1993
(51) Int. Cl.: B01D 46/24

(54) **Filtration using ceramic filter tubes**

(30) Priority: 17.09.1992 GB 9219698
(71) Applicant: FOSECO INTERNATIONAL LIMITED, Nechells Birmingham B7 5JR (GB)
(72) Inventor: Withers, Christopher Joseph, Kidderminster, Worcestershire DY11 5SE (GB); Callis, Roger Graham, Sapcote, Leicester LE9 6JP (GB)
(74) Representative: Eyles, Winifred Joyce

(57) **Abstract**

The invention relates to filtration of, e.g. hot gases, using ceramic filter tubes.

It provides a kit of parts for a ceramic filter tube, the kit comprising two or more shorter porous ceramic tubes (11, 12), the shorter tubes having ends (13 or 14) designed to mate with the end (14 or 13) of an adjacent shorter tube when assembled to form the desired filter tube (10) and a tie bar (17) to pass longitudinally through the assembled tube (10), the tie bar (17) being connectable at one end to a support plate (15) into which one open end of the filter tube (10) can be attached and at its other end to a closure plate (18) to seal the other end of the filter tube (10), whereby the shorter tubes (11, 12) are held together in compression.

The invention also provides a filtration apparatus and a tie bar for use in the invention.

## Description

This invention relates to filtration and particularly to the filtration of hot fluid media, e.g. filtration of hot gases at temperatures of up to 1000°C or more.

The filtration of hot gases, e.g. flue gases from industrial manufacturing operations, boilers and refuse incinerators, to remove particulates or gaseous components, is well known and numerous devices have been proposed and used for this purpose. A particularly useful form of apparatus utilises a gas-permeable substantially rigid ceramic tube closed at one end and a series of such tubes is usually mounted in holes in a metal support plate. The gas to be filtered is passed into contact with the exterior of the ceramic tubes and the gas passes to the interior of the tubes and exits through their open ends leaving undesired particulates at the exterior of the tube walls.

Ceramic tubes for this purpose can be made, for example, by vacuum-forming a slurry of the desired ceramic composition, usually containing a proportion of ceramic fibres. However, this process cannot readily be used to manufacture relatively long monolithic filter tubes, e.g. of greater than 1.5 metres length. Thus, although there are good technical and commercial reasons for requiring longer filter tubes in many installations, there are problems in achieving this objective.

The longer the individual tubes that are used, the fewer that are required for a particular filtration capacity. As each tube has to be associated with complicated mounting and cleaning means, clearly the fewer tubes that are used, the less the overall cost of the installation. However, even if sufficiently long tubes can be satisfactorily manufactured, their transportation and installation can lead to damage, long lengths of rigid ceramic tube being very vulnerable in this respect.

It has been proposed to provide longer tubes from shorter lengths of tube, designed to be assembled together end to end and, then cemented together into a relatively permanent longer length. Such tubes, of course, are still subject to risks of transportation damage, as indicated above.

Longer tubes are also subject to other disadvantages. Being heavier than shorter tubes, they require additional support underneath as they may be too heavy to hang from a support plate at their upper, open ends.

Moreover, an installation of long length filter tubes is more difficult to clean by conventional means. Cleaning is usually achieved by back-pulsing gas in the opposite direction through the tubes, the back-pulse pressure being applied at the open ends of the tubes. Clearly, the longer the tubes, the less efficient the cleaning process towards the closed end of each tube, i.e. the end remote from the end at which the back-pulse pressure is applied.

The present invention aims to provide an improved ceramic filter tube and filtration system based on rigid ceramic filter tubes in which the various above-mentioned problems are overcome or ameliorated and which is suitable for in-situ installation of shorter tubes into the desired longer lengths.

In one aspect the invention provides a kit of parts for a ceramic filter tube, comprising two or more shorter porous ceramic tubes, the shorter tubes having ends designed to mate with the end of an adjacent shorter tube when assembled to form the desired filter tube and a tie bar to pass longitudinally through the assembled tube, the tie bar being connectable at one end to a support plate into which one open end of the filter tube can be attached and at its other end to a closure plate to seal the other end of the filter tube, whereby the shorter tubes are held together in compression.

Preferably, one end of each shorter tube has a dependent stepped flange protruding at an angle between the longitudinal axis of the tube and the normal to that axis and the other end being shaped to mate with a corresponding stepped flange on an adjacent shorter tube. However, alternative interlocking means may be found suitable, e.g. tongue and groove means respectively on the mating ends.

The shorter tubes can, therefore, be assembled together to form the desired longer length without adhesive means, although such means could be additionally used, if desired. The assembly of tubes can be mounted in the support plate under sufficient compression to ensure a sealed joint between the shorter tube segments.

The composite tube so-formed will, as indicated, be open at its end to be attached to the support plate. The opposite end of the tube is closed by the attachment of an end closure plate and, preferably, there will be an end closure plate for each tube. Alternatively, one end closure plate may be of sufficient size to close a plurality of tubes.

Thus, in another aspect, the invention provides a filtration apparatus comprising a series of ceramic tubes, each tube being attached at one end to a support plate and being open at that end and being closed at the other end by an end closure plate, the support plate and end closure plate being held at the desired distance apart by a metal tie bar passing longitudinally down each ceramic tube and secured to both plates.

In a preferred embodiment the tie bars are hollow metal tubes having apertures for the passage of gas.

Thus, in a further aspect the invention provides a hollow tie bar for a ceramic filter tube, the bar having apertures along its length and being adapted to engage adjacent one end with a support plate for ceramic filter tubes and adjacent its other end with a closure end plate for said ceramic filter tube.

By this means the region of the ceramic tubes remote from their open ends can be more effectively cleaned. Cleaning gas under pressure can be passed inside the hollow metal tube and will emerge from the apertures even at the far end of the tube under sufficient pressure to ensure satisfactory purging of the walls of the tube.

The hollow metal tube should be attached to the support plate, or alternatively, to the end closure plate, by means that allow for differential thermal expansion while maintaining required compressive force between the different components of the filtration apparatus. By this means, a good seal can be maintained between the ceramic tube and the support plate and between the ceramic tube segments to avoid leakage of particulate-laden gas into the filtered gas stream. The means may be, for example, metal or ceramic springs.

Embodiments of the invention will now be described, by way of example only, with reference to the accompanying drawing which is a part-section view of a portion of an apparatus according to the invention.

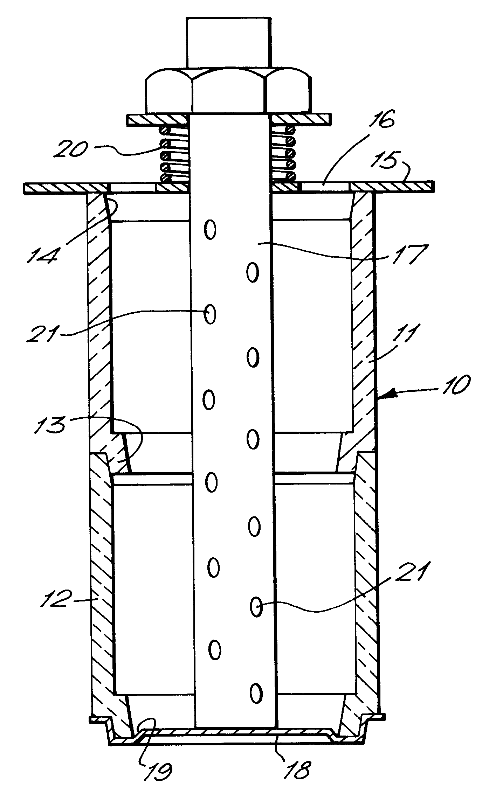

In Figure 1, ceramic filter tube 10 is made up from two shorter tubes 11 and 12. These interlock into sealing engagement with each other under compressive force by virtue of having an inwardly-angled dependent flange 13 at one end and a correspondingly tapered end 14 at the opposite end.

Tube 12 is attached under compressive force to a support plate 15 which is apertured at 16 to allow egress of the filtered medium passing through the porous wall of tube 10. Tube 10 hangs vertically beneath support plate 15 and is maintained in position by tie bar 17 which extends longitudinally inside tube 10.

At its lower end, tie bar 17 is attached to an end plate 18 which thereby closes off the lower end of tube 10. End plate 18 is shaped adjacent its periphery to provide an angled annular recess 19 into which the flanged end of tube 10 snugly fits.

At its upper end, tie bar 17 passes through support plate 15 and is attached to support plate 15 by spring means 20 which ensure that the desired compressive support to tube 10 is maintained despite the differential thermal expansion of the metal tie bar and support plate and the ceramic tube.

Tie bar 17 is a hollow metal tube having a series of apertures 21 along its length.

In use, unfiltered gas passes from the exterior of tube 10 to its interior leaving undesired particles on the exterior wall of the tube. The filtered gas passes to the desired exit collection means via holes 16 in support plate 15. When it is desired to clean filter tube 10, a back pulse of clean air under pressure is sent through tie bar 17, exits through holes 21 and passes through the walls of tube 10 to its exterior, thereby dislodging accumulated particle deposits. The tube surface is thereby cleaned effectively over its entire length.

It will be appreciated that the embodiments described can be changed without departing from the scope and spirit of the invention. For example, a sealing gasket may be incorporated between or overlapping the mating edges of adjacent shorter tubes. The tie bar may be shaped so that its upper edge is narrow to present as little obstruction as possible to incoming gas flow during back pulse cleaning.

## Claims

1. A kit of parts for a ceramic filter tube, the kit comprising two or more shorter porous ceramic tubes (11, 12), characterised in that the shorter tubes (11, 12) have ends (13 or 14) designed to mate with the end (14 or 13) of an adjacent shorter tube when assembled to form the desired filter tube (10) and a tie bar (17) to pass longitudinally through the assembled tube (10), the tie bar (17) being connectable at one end to a support plate (15) into which one open end of the filter tube (10) can be attached and at its other end to a closure plate (18) to seal the other end of the filter tube (10), whereby the shorter tubes (11, 12) are held together in compression.

2. A kit of parts according to Claim 1, characterised in that one end of each shorter tube (11, 12) has a dependent stepped flange (13) protruding at an angle between the longitudinal axis of the tube (11, 12) and the normal to that axis and the other end (14) being shaped to mate with a corresponding stepped flange (13) on an adjacent shorter tube (12, 11).

3. A kit of parts according to Claim 1, characterised in that the ends of the shorter tubes (11, 12) have tongue and groove interlocking means.

4. A kit of parts according to Claim 1, 2 or 3, characterised in that it includes adhesive to bond the ends of adjacent shorter tubes (11, 12) together.

5. A kit of parts according to any preceding claim, characterised in that there is an individual closure plate (18) for each assembled tube (10).

6. A kit of parts according to any preceding claim, characterised in that the tie bar (17) is a hollow metal tube having apertures (21) for the passage of gas.

7. A kit of parts according to any preceding claim, characterised in that it includes attachment means (20) to attach the tie bar (17) to the support plate (15) or to the closure plate (18) which means allow for differential thermal expansion between the bar, plate and tube.

8. A kit of parts according to Claim 7, characterised in that the attachment means (20) are metal or ceramic springs.

9. A filtration apparatus comprising a series of ceramic tubes, each tube being open at one end and attached to a support plate (15) characterised in that the other end of each tube (10) is closed by an end closure plate (18), the support plate (15) and closure plate (18) being held at the desired distance apart by a metal tie bar (17) passing longitudinally down each ceramic tube (10) and secured to both plates (15, 18).

10. A filtration apparatus according to Claim 9, characterised in that the tie bar (17) is a hollow metal tube having apertures (21) for the passage of gas.

11. A filtration apparatus according to Claim 9 or 10, characterised in that the tie bar (17) is attached to the end closure plate (18) or the support plate (15) by means (20) that allow for differential thermal expansion between the bar, plate and tube.

12. A filtration apparatus according to Claim 9, 10 or 11, characterised in that the ceramic tubes (10) are formed from two or more shorter tubes (11, 12) having ends (13 or 14) designed to mate with the end (14 or 13) of an adjacent shorter tube.

13. A filtration apparatus according to Claim 12, characterised in that one end of each shorter tube (11, 12) has a dependent stepped flange (13) protruding at an angle between the longitudinal axis of the tube (11, 12) and the normal to that axis and the other end (14) being shaped to mate with a corresponding stepped flange (13) on an adjacent shorter tube (12, 11).

14. A filtration apparatus according to any one of Claims 9 to 13, characterised in that each tube (10) is closed by an individual end closure plate (18).

15. A tie bar for a ceramic filter tube, characterised in that the tie bar (17) is a hollow tube having apertures (21) along its length and being adapted to engage adjacent one of its ends with a support plate (15) for the ceramic tube (10) and adjacent its other end with an end closure plate (18) for the ceramic tube (10).
